# EUROPEAN PATENT APPLICATION

(11) **EP 1 453 172 A1**
(43) Date of publication of application: **01.09.2004**
(21) Application number: 01980549.8
(22) Date of filing: 26.10.2001
(51) Int. Cl.: H02H 7/085, E05F 15/16

(54) **METHOD OF DETECTING OBSTRUCTIONS CAUSED BY ELECTRIC WINDOWS AND SIMILAR DEVICES USING CURRENT RIPPLE**

(71) Applicant: Lear Automotive (EEDS) Spain, S.L., 43800 Valls, Tarragona (ES)
(72) Inventor: BIGORRA VIVES, Jordi, E-43800 Valls (ES); FERRE FABREGAS, Antoni, E-43800 Valls (ES); MERINO PANADES, Jose Luis, E-43800 Valls (ES); BOTA FERRAGUT, Sebastiá, E-43800 Valls (ES); GARCIA HERNANDO, Francisco, Javier, E-43800 Valls (ES); GIMENEZ PINO, Rafael, E-43800 Valls (ES); SAMITIER MARTI, Josep, E-43800 Valls (ES)
(74) Representative: Primo de Rivera y Urquijo, Jose Antonio
(86) International application number: PCT/ES2001/000407
(87) International publication number: WO 2003/036774

(57) **Abstract**

A method for controlled management of a movable element actuated by an electric motor, with anti-nipping or crushing security, and the program used, which movable element is guided and actuated by a DC permanent magnet multipolar electric motor, characterized by comprising the following steps:
- acquiring the consumption intensity of the electric motor;
- sampling of said intensity at a frequency which permits identifying the intensity response of each inductor;
- calculating an average intensity of the motor;
- obtaining the angular rotation velocity of the motor from the ripple of the current curve of the motor;
- obtaining a parameter Fᵣ representative of the force applied on said movable element, calculated with said average intensity and angular velocity; and
- acquiring and evaluating the variation of said parameter Fᵣ throughout time and detecting a nipping or crushing situation if said variation exceeds a predetermined threshold and is maintained for more than a predetermined time period.

## Description

### Field of the Invention

The present invention is applicable within the field of management methods under control of electromechanical assemblies, and provides a method and means for controlled management of a movable element actuated by an electric motor, with security for being able to prevent a harmful action of said element, either with regard to a user part or member, an object or structural part against which said movable element is susceptible to hitting in its displacement run, adopting, due to such circumstance and by virtue of a quick, immediate detection thereof, suitable countermeasures, stopping and inverting the run of said movable element.

The invention is particularly applicable to a window opening device for a vehicle, actuated by a DC permanent magnet multipolar electric motor, safe against trapping and/or exercising a crushing force on an object interposed in the path of said window, or against nipping a member or part of a person, since it quickly applies countermeasures, although its field of application can be generalized to any class of movable panel or window actuated by an electric motor having such features, its main objectives being constructive simplicity and response speed, and accordingly, the possibility it provides of adopting said countermeasures for preventing said unwanted trapping or crushing situation.

The invention also provides a program prepared to be loaded in the internal memory of a computer suitable for carrying out several of the steps of the method according to the invention, especially for running the detection algorithm.

### Background of the Invention

With regard to electronic control devices with anti-crushing security, associated to an electric motor intended to actuate a panel, such as a vehicle window or other similar movable element, numerous system and method embodiments are known, it being worth mentioning patents EP-A-267064, DE-A-4315637, EP-A-714052, US-A-5723960, US-A-5734245, US-A-5689160, US-A-5832664, US-A-5994858, US-A-5983567, US-A-5949207, US-A-5945796, US-A-6002228, US-A-6086177 and US-A-6150785.

These methods generally propose using position detectors and current sensors for providing information intended to run a control algorithm. Some of the patents also mention the use of detectors of the angular velocity of the motor and/or detectors of the drive torque of said motor.

US patent 6,273,492 refers to an operating mechanism for actuating the folding top of a convertible vehicle which, in the case of using a DC motor, proposes that an electronic control carry out the sensing and counting of the voltage and current peaks by means of, among several alternatives, commutation of the motor (ripple counting). The proposals explained in this document, as well as the approached drawback, radically differ from those pertaining to the present invention.

### Description of the Invention

The method proposed herein is based on the fact that the emergence of an object in the path of a movable element, particularly in the upward path of an electric motor-actuated window in a vehicle, in which field the present inventors have developed ample work, causes a decrease in the upward speed of said window and an increase in the motor current intensity. Unlike other methods which evaluate only one of the two consequences/effects involved in an anti-nipping and anti-crushing security system (speed and intensity), the proposed method provides greater sensitivity since it takes the two effects into account by carrying out an evaluation of a parameter Fᵣ representative of the drive torque transmitted by the motor shaft and transferred as a thrust on said movable element, which parameter is calculated from the intensity and angular velocity.

To obtain Fᵣ, intensity and angular velocity are measured. The intensity can be measured directly with a shunt-type sensor or with a magnetic sensor. To measure the angular velocity, no additional measurement is necessary since it is possible to use the ripple counting technique or calculation as from the current rippling, that is, from the change of intensity existing every time the motor turns and the sliding contact goes from one inductor to another.

As is well known, a DC motor comprises a series of coils or inductors wound around a core. With two fixed contacts called brushes, one of the inductors is connected to the polarization voltage, depending on which of the inductors is in contact with said brushes. Each inductor makes contact with the brush during a specific rotation angle of the motor, and then the brush polarizes another inductor. The already known ripple counting technique is based on the experimental observation of the fact that when the motor rotates and the contact or brush crosses from one pole to the other, a peak occurs in the current curve of the motor, which peak is easily observable by means of a current sensor. By measuring the time elapsed between two of these peaks, the motor rotation period T and also the position of the movable element actuated by the motor can be calculated, thereby being able to calculate the instantaneous speed of said movable element.

This technique will thus permit controlling the position of a movable element, such as an automotive vehicle window, actuated by a DC permanent magnet multipolar electric motor, with no need to have a positioning sensor or speed sensor.

The control method and algorithm proposed is based on an evaluation of the force exerted by the motor at all times.

From the experimental studies developed by the inventors, particularly measuring the evolution of both the intensity and upward speed of a vehicle window during the entire run, as well as of the electric drive motor behavior due to the occurrence of a force of opposition to the displacement of said movable window, it has been shown that in said latter circumstance capable of causing nipping or crushing, an instantaneous speed variation of the movable element (angular velocity of the motor) occurs as well as, with certain delay, a variation of the intensity passing through the motor. Said delay depends on the ratio between the inductance and resistance of the motor, as the latter is designed according to an equivalent electric model formed by a series resistance with a series inductance and a voltage source.

Essentially, the proposed method, according to the invention, for controlled management of a movable element actuated by an electric motor, with anti-nipping or anti-crushing security, said mobile element having a diverse nature, such as a panel or window, seat or part thereof, or the like, being suitably guided and actuated by a DC permanent magnet multipolar electric motor, comprises the following steps:
- acquiring the consumption intensity of the electric motor by means of a current sensor, such as a shunt-type or magnetic sensor;
- sampling of said intensity at a frequency (generally low, in the range of 2 to 4 kHz) which permits identifying the intensity response of each one of the inductors;
- calculating an average intensity in at least a fraction of a turn of the motor (generally, throughout a turn) representative of the backscattering of the different inductors;
- obtaining the angular rotation velocity of the motor from the ripple appearing in the current curve of the motor;
- obtaining a parameter Fᵣ representative of the drive torque Fₐ applied on said movable element, which parameter is calculated from said average intensity and from said angular velocity; and
- acquiring and subsequently evaluating the variation of said parameter Fᵣ throughout time and detecting a nipping or crushing situation in case said variation exceeds a predetermined threshold and is maintained for more than a predetermined time period, said detection permitting the immediate adoption of countermeasures.

To better understand the features of the invention, a detailed description thereof will be made below as merely an example, making reference to several attached drawings showing the main aspects involved in the proposed method.

### Brief Description of the Drawings

In said drawings:
Figures 1a and 1b show two illustrative diagrams in order to understand the current ripple effect occurring in an electric motor.
Figure 2 shows a graph of the intensity sampled in a short time period (12 ms), having removed the DC component.
Figures 3a and 3b show the shape of the current ripple when closing and opening a vehicle window, respectively.
Figure 4a shows the original current signal (with the ripple) and Figure 4b shows the average intensity used in the method, according to the aforementioned.
Figure 5 shows a block diagram explaining the method according to the invention.
Figure 6 lastly shows a diagram explaining the detection process or algorithm of a nipping or crushing situation, generated by displacement of the movable element.

### Detailed Description of the Invention

The ripple is a feature of the current intensity passing through a DC permanent magnet motor and is closely related to the motor rotation, each time the brushes switch from one commutator bar (rotating commutator segment) to another. Current oscillation detection will permit knowing the displacement of the movable element actuated by the electric motor and following up on its position.

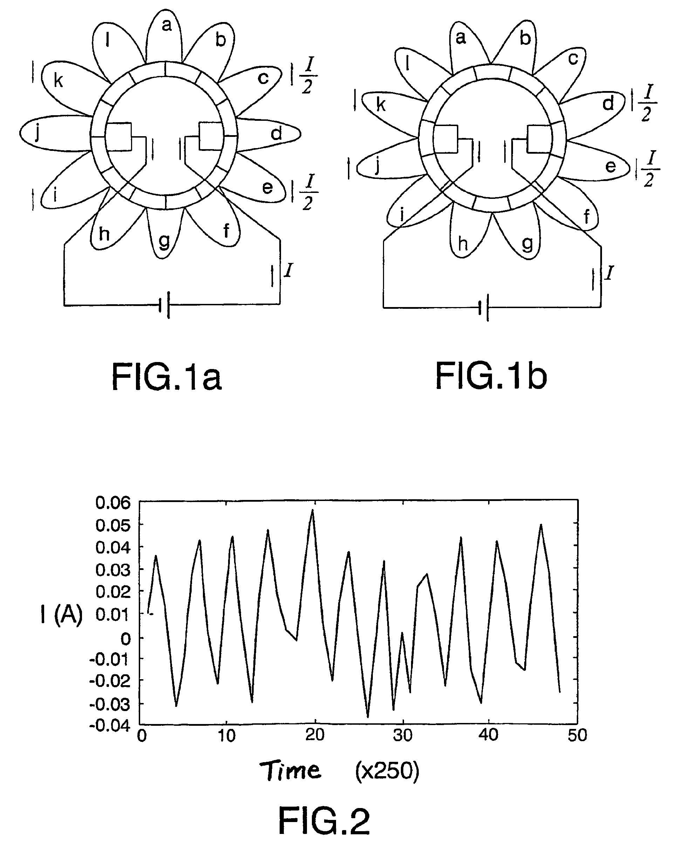

Current rippling occurs basically because of the overlapping of two effects. The first one originates in the counter electromotive force induced in the coils or inductors which, assuming that the rotor of the motor were submerged in a uniform magnetic field, makes said counter electromotive force induced in each coil have a rectified sinusoid shape, that is, rippling occurs in the counter electromotive force generated in the entire winding, and this in turn causes rippling in the current intensity which reaches the motor. The second effect is related to the number of coils or inductors contributing at all times to the total counter electromotive force. In this aspect, two situations can be shown, a first one in which all the coils contribute, and a second one in which there are two short-circuited coils, and therefore, since current does not pass through them, they do not contribute. The first situation occurs when each one of the brushes is in contact with a single commutator bar or rotating commutator segment, which situation is shown in figure 1b, then coils d, c, b, a, l, k conduct half of the current, and coils e, f, g, h, i, j conduct the other half, as can be seen in the diagram. However, when each one of the brushes is in contact with two commutator bars, as shown in figure 1a, the second situation occurs, the ends of coils j and d are short-circuited, which causes the counter electromotive force generated in coils j and d to not contribute to the total.

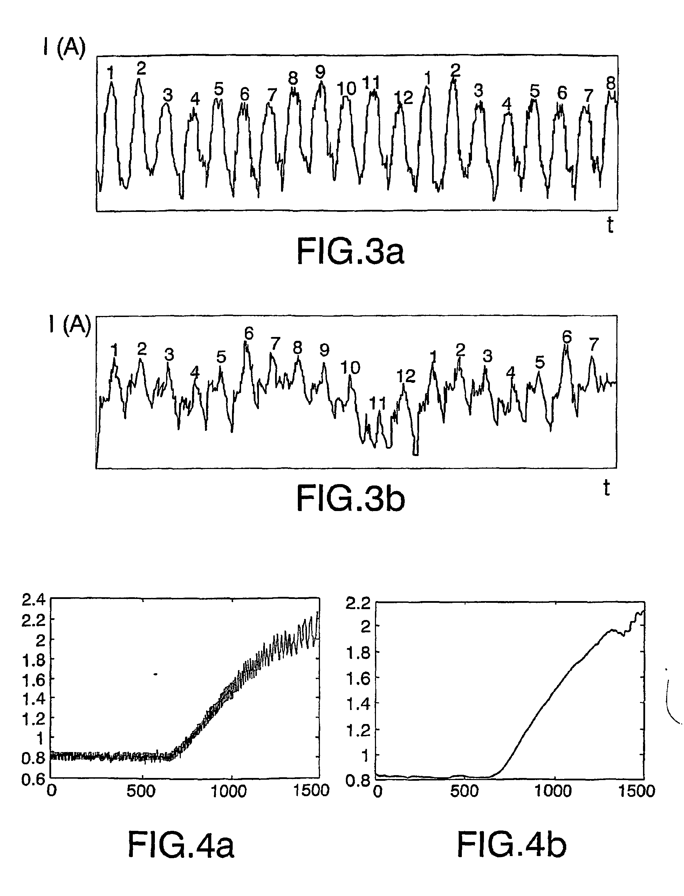

The shape of this rippling can be seen in figures 3a and 3b, which show the closing and opening situations of a vehicle window. It can be seen that the oscillations when closing are different from when opening, this is because the torque exerted on the motor by the weight of the window acts in different directions with regard to the motor rotation. Furthermore, there is the friction effect of the window with the door frame and with its guides, which is different when closing from when opening.

In the case of application to movable window displacement control, the detection method must be able to operate when closing as well as when opening the movable element. Although the two signals are apparently very different when sampled, depending on the frequency, it is possible to obtain signals in which the oscillations of much higher frequency and which are much more similar have been removed.

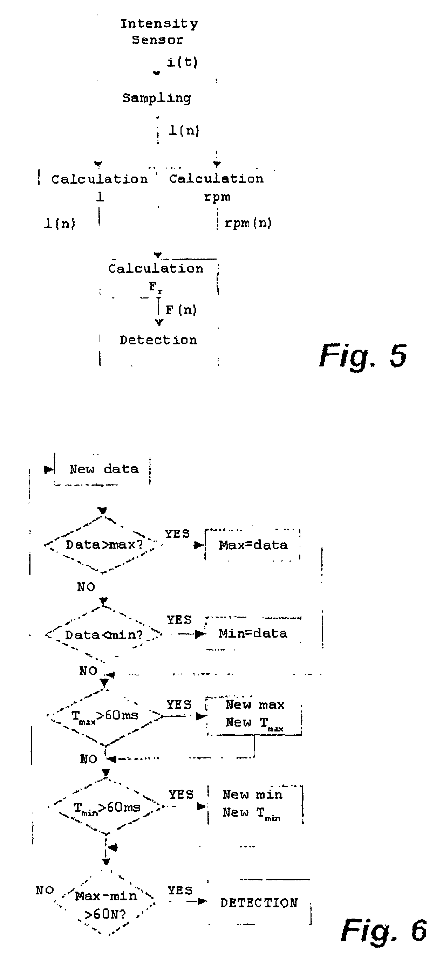

In reference to the method shown in figure 5 and the previously listed steps, once the intensity is acquired as a continuous variable i(t), it is sampled with an A/D converter. The parameters which can be arranged for the A/D converter are the number of conversion bits and sampling frequency. The number of bits provided by a reasonable quantization step is 10, which permits perfectly seeing the ripple and the increase due to a situation of hitting against an obstacle with subsequent nipping or crushing. With regard to sampling frequency, this was done in a range of 2 to 4 kHz. A 3 kHz frequency is suitable since the ripple oscillations have an approximate duration of one ms, which provides a main frequency of 1 KHz. According to the Nyquist criterion in a discretized sample at a frequency of 3 kHz, it is possible to see frequencies of up to 1.5 kHz, that is, those of the rippling plus a certain safety margin. Figure 2 shows how the intensity sampled in a short time interval (12 ms) looks.

Subsequently, a variable is defined which is similar to the intensity but without the ripple caused by said ripple effect, or any other temporal deviation except for that caused by an increase in the torque carried out by the motor. The first effect which must be removed is the ripple effect. To do so, it is enough to carry out the average of every 3 samples, which are those involved in each pole, which has an approximate duration of 1 ms. The other effect that must be removed is that of the difference between poles. In a preferred embodiment of the invention, it has been proposed to carry out the intensity average during an entire turn of the motor, in which the motor passes through all its inductors. In figures 4a and 4b, a comparison between the original signal (with ripple) and the average intensity l(n) can be seen.

The angular velocity is obtained by counting the number of samples existing between two successive zero crossings of the initial signal (with ripple) with regard to the intensity average.

Once the variables l(n) and angular velocity, expressed in the block diagram of figure 5 as rpm (n), are obtained, parameter Fᵣ is obtained from them, in this specific case, from the product of the two.

The last step of the method consists of detecting a situation of the movable element hitting against an obstacle, capable of generating a nipping or crushing. For this, said Fᵣ is evaluated. In the example shown in figure 6, the method should detect a variation in parameter Fᵣ greater than 60 N in a time of less than 60 ms. For such purpose:
- 1: a new parameter Fᵣ data is seized;
- 2: the previously acquired Fᵣ maximums or minimums are updated, if necessary (in case of exceeding or being below the previous values);
- 3: the maximum or minimum is updated if its "standing" (maintenance) is more than 60 ms;
- 4: with the new maximum and minimum values, it is consulted whether the difference between them must be considered a nipping or crushing situation (that is, if a predetermined threshold is exceeded), and in said case, a warning signal is generated through a preferential attention channel, such that suitable countermeasures can be adopted immediately.

That is, the consecutive maximum and minimum values of parameter Fᵣ are monitored at preset time intervals, and are compared to previously acquired values, as long as that pair of maximum and minimum values is maintained for more than 60 ms, substituting said previous values with the new ones if their magnitude exceeds them or is lower, respectively, and immediately calculating the difference between the new pair of values which, should it exceed a preset threshold, triggers the detection situation.

This algorithm can be implemented by means of a computer program applied to automatically running its different steps.

The ratio between measured force (for example a load cell) and the intensity can be obtained from a series of curves obtained in experimental works, for example applied to the evolution of a vehicle window. Since the average intensity and angular velocity parameters are obtained from the intensity and Fᵣ is obtained from the former two, it is possible to find a direct ratio between the force applied to the window and said parameter. By knowing said ratio, it is possible to easily define the limits in which parameter Fᵣ can oscillate without causing a situation susceptible to generating a nipping or crushing.

With regard to the explained method, the inventors have also evaluated and considered feasible, although as an alternative with fewer advantages, the possibility of measuring intensity at high frequency and using the also known pole recognition and initial peak processing techniques (such as the ripple counting technique) for knowing at all times the mobile element's position without needing any other sensor. Such option, in which, like in the preferred, previously detailed proposal, only one type of intensity sensor is used, poses the drawback that the sampling frequency is higher, in the range of 20 kHz, which requires an A/D converter with better performance, as well as a much better calculation capacity in order to use the pole recognition and initial peak detection techniques.

It is obvious that the principles of the invention, the essential aspects of which are detailed in the following claims, are applicable to the controlled management of any movable element actuated by an electromotor, and its direct application in the automobile sector will be for different classes of movable elements susceptible to hitting against an obstacle in its displacement such as windows, different panels, seat parts, etc.

## Claims

1. A method for controlled management of a movable element actuated by an electric motor, with anti-nipping or crushing security, which movable element, such as a panel or window, seat or part thereof, is suitably guided and actuated by a DC permanent magnet multipolar electric motor, **characterized** for comprising the following steps:
- acquiring the consumption intensity of the electric motor by means of a current sensor;
- sampling of said intensity at a frequency which permits identifying the intensity response of each one of the inductors;
- calculating an average intensity in at least a fraction of a turn of the motor representative of the backscattering of the different inductors;
- obtaining the angular rotation velocity of the motor from the ripple appearing in the current curve of the motor;
- obtaining a parameter Fᵣ representative of the drive torque Fₐ applied on said movable element, which parameter is calculated from said average intensity and from said angular velocity; and
- acquiring and subsequently evaluating the variation of said parameter Fᵣ throughout time and detecting a nipping or crushing situation in case said variation exceeds a predetermined threshold and is maintained for more than a predetermined time period, said detection permitting the immediate adoption of countermeasures.

2. A method according to claim 1, **characterized in that** said average intensity is calculated in each turn of the motor.

3. A method according to claim 1, **characterized in that** said intensity sampling is carried out at a low frequency in the range of 2 to 4 kHz.

4. A method according to claim 3, **characterized in that** said sampling is carried out by an A/D converter.

5. A method according to claim 1, **characterized in that** said angular velocity is obtained by counting the number of samples existing between two successive zero crossings of the consumption current signal of the motor, with its ripple, with regard to the intensity average.

6. A method according to claim 1, **characterized in that** said current sensor has a response range in frequency which does not screen by filtering the intensity ripple effect.

7. A method according to claim 6, **characterized in that** said current sensor is shunt-type.

8. A method according to claim 6, **characterized in that** said current sensor is a magnetic sensor.

9. A method according to claim 1, **characterized in that** said detection of a nipping or crushing situation of the movable element with regard to a person's member, object or structural part, is carried out by means of an algorithm comprising:
• monitoring the consecutive maximum and minimum values of parameter Fᵣ at preset intervals;
• storing a first pair of consecutive maximum and minimum values;
• comparing each new pair of monitored maximum and minimum values with said previously stored first pair, and substituting them in case their values are higher or lower, respectively, and are maintained for more than said predetermined time period, and
• evaluating the difference between said new maximum and minimum values of the pair of values with regard to said predetermined variation threshold.

10. A computer program susceptible to being loaded directly in the internal memory of a digital computer and comprising computer program code parts in order to carry out the steps of claim 9.
